# EUROPEAN PATENT APPLICATION

(11) **EP 1 997 372 A2**
(43) Date of publication of application: **03.12.2008**
(21) Application number: 08251564.4
(22) Date of filing: 29.04.2008
(51) Int. Cl.: A01K 97/12

(54) **A fish-bite detector**

(30) Priority: 01.06.2007 GB 0710466
(71) Applicant: Fox International Group Limited, Hainault, Essex IG6 3UT (GB)
(72) Inventor: Fox, Clifford Royston, Upminster Essex RM 14 1TP (GB); Simpson, Nigel, Ventnor Isle Of Wight CO38 3BZ (GB)
(74) Representative: Crouch, David John

(57) **Abstract**

A fish-bite detector having magnetic means (66) to change the magnetic field in a predetermined region of the detector in dependence upon movement of a fishing line. The latter engages a rotary part (26) of the detector when the latter is in use. Sensor means (76, 77) are provided in the said predetermined region to produce a signal indicative of such movement. The magnetic means comprise at least one magnet (66) which is mounted to move with the rotary part (26). The magnetic axis of the magnet (66) is generally parallel to the axis of rotation of the rotary part (26). The sensor means (76, 77) comprise two Hall effect devices (76 and 77). The Hall effect devices (76 and 77) have their sensitive faces directed towards the magnetic means (66). The Hall effect devices (76 and 77) are located alongside one another on opposite sides of an imaginary plane which passes through the axis of rotation of the rotary part (26), thereby enabling the Hall effect devices (76 and 77) to produce a signal indicative of the direction of longitudinal movement of the line.

## Description

The present invention relates to a fish-bite detector having magnetic means to change the magnetic field in a predetermined region of the detector in dependence upon movement of a fishing line which engages a rotary part of the detector when the latter is in use, and sensor means provided in the said predetermined region to produce a signal indicative of such movement, in which the magnetic means comprise at least one magnet which is mounted to move with the rotary part, the magnetic axis of which magnet is generally parallel to the axis of rotation of the rotary part.

Such a detector is disclosed in GB-A-2209261, in which a Hall effect device is used as the sensor means. However, the detector disclosed in that earlier specification does not distinguish between line movement in one longitudinal direction thereof, and line movement in the other direction thereof.

EP-A-0850562 does disclose a detector which can distinguish between forward and rearward longitudinal line movement, but that uses reed switches as the sensor means. Reed switches are fundamentally mechanical devices which can fail, especially if the detector is accidentally dropped or knocked. Mere replacement of the reed switches by Hall effect devices is unsatisfactory because if the latter are not precisely matched, one of them may be triggered before the other even if at the time it is in a weaker magnetic field.

The present invention seeks to provide a remedy.

Accordingly the present invention is directed to a fish-bite detector having the construction set out in the opening paragraph of the present invention, in which the sensor means comprise two Hall effect devices, in which the Hall effect devices have their sensitive faces directed towards the magnetic means, and in which the Hall effect devices are located alongside one another on opposite sides of an imaginary plane which passes through the axis of rotation of the rotary part, thereby enabling the Hall effect devices to produce a signal indicative of the direction of longitudinal movement of the line.

Since the Hall effect devices are solid state they are less susceptible to failure or damage by knocks and jolts. They are also more magnetically sensitive than reed switches. Furthermore, they cause less drag on the rotary part than reed switches. They are less susceptible to drifting in their characteristics with age and over a range of temperatures, nor do they have a finite mechanical life as do reed switches. Finally, they are smaller than reed switches and are therefore more easily accommodated within a housing of the detector.

Preferably, the two Hall effect devices have respective magnetic sensitivities, the greater of which is no more than 10% greater than the other, preferably no more than 1% greater. Most preferably, the magnetic sensitivities are substantially equal. This enables them to be placed closer together, for example no more than 1.5mm apart, whilst still resolving the direction of longitudinal movement of the line.

The magnetic means may comprise for example four magnets spaced apart around the axis of the rotary part, although the matching of the Hall effect devices and the positioning of them close together may enable the magnetic means to comprise six or eight equiangularly spaced magnets within the limited space provided.

The use of Hall effect devices in this manner affords the advantage that a relatively short period of time between successive switching of the Hall effect devices can occur reliably, with consequent reduced likelihood of confusion arising should line movement change direction suddenly. Furthermore, the devices can be incorporated directly in digital electronic circuitry, and are less susceptible to knocks and jolts than reed switches.

Preferably, the Hall effect devices are parts of a dual Hall effect device.

Advantageously, the Hall effect devices are mounted on a printed circuit board of the detector which is generally parallel to the axis of rotation of the said rotary part and which extends to a region alongside the magnetic means, on both sides of the axis of rotation of the said rotary part viewing the detector in a direction generally perpendicularly to the printed circuit board.

If the dual Hall effect device has four connecting pins extending from one side thereof, these may be readily connected to the printed circuit board.

In one preferred construction of the present invention, one of the Hall effect devices is connected to the clock input of a bi-stable flip-flop, and the other is connected to the data input thereof.

Advantageously, it is the Hall effect device which is switched first when the fishing line moves in a direction corresponding to a paying out of the line, which is connected to the clock input of the flip-flop.

The Q and _Q outputs may be connected to both the set and reset inputs of a second bi-stable flip-flop, the clock input of which is connected to receive an output from a trigger pulse generator connection to one of the Hall effect devices to generate pulses in dependence upon closure of that Hall effect device, the _Q output of the second flip-flop being fed back to the data input thereof.

Preferably the trigger pulse generator is connected to receive signals from that Hall effect device which is connected to the clock input of the first-mentioned flip-flop.

The Q and _Q outputs from the second flip-flop may be connected to a buzzer driver which in turn is connected to a buzzer.

The _Q output of the second flip-flop may be connected to an LED driver which in turn is connected to drive the LED.

The buzzer driver may be so constructed as to cause a first audio signal to be issued when the line moves in a longitudinal direction corresponding to a paying-out of the line, and a second audible signal when the line moves in the other longitudinal direction.

A further disadvantage of the detector disclosed in GB-A-2209261 is the consumption of energy required in having the Hall effect device switched on fully throughout a period in which a signal is anticipated. A further aspect of the present invention seeks to remedy this.

Accordingly, the present invention extends to a fish-bite detector having magnetic means to change the magnetic field in a predetermined region of the detector in dependence upon movement of a fishing line which engages a part of the detector when the latter is in use, and a Hall effect device provided in the predetermined region to produce a signal indicative of such movement, in which the Hall effect device is connected to a periodic timer switch so that it is switched on and off at predetermined intervals, such that the on period in each cycle is significantly shorter than the off period, in which a comparator is also connected to the Hall effect device so that the state of the latter during an on period is compared with the state it had in a previous on period, and if the state has changed, the comparator switches the Hall effect device to a continuously on condition.

An example embodiment of a bite detector made in accordance with the present invention will now be illustrated with reference to the accompanying drawings, in which:
- Figure 1: shows a front elevation view of the detector;
- Figure 1a: shows an axial sectional view of a central knob of the detector shown in Figure 1;
- Figure 2: shows an interior of a first half of the detector shown in Figure 1;
- Figure 2a: shows an axial view of parts of the detector shown in Figures 1 and 2;
- Figure 3: shows a circuit diagram of electrical circuitry within the interior shown in Figure 2;
- Figures 4 and 5: show respective different graphs of different sets of voltage levels at a first bi-stable flip-flop of the circuitry shown in Figure 3 for different directions of longitudinal movement of a fishing line; and
- Figures 6 and 7: show respective different sets of voltage levels at a second bi-stable flip-flop of the circuitry shown in Figure 3 for such different directions of line movement.

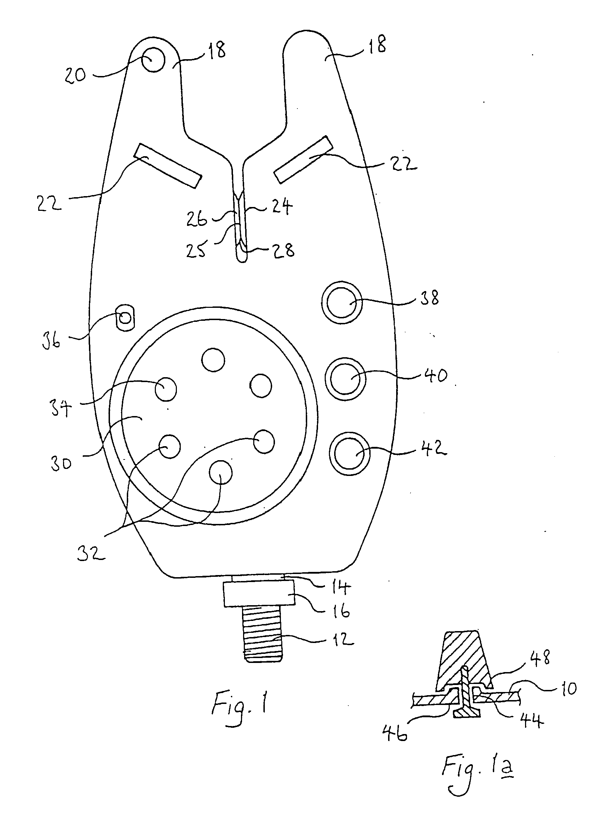

The fish-bite indicator shown in Figure 1 comprises a two-part synthetic plastics injection moulded housing 10 having an external screw-threaded metal shank 12 extending downwardly from its underside. A seal is formed between the housing 10 and the shank 12 by means of an O-ring 14 and a tightening nut 16 which urges the O-ring 14 tightly against the housing 10 and inwardly against the shank 12.

The upper end of the housing 10 is bifurcated, so that it has two generally upwardly extending prongs 18, at the upper end of the left hand of which there is provided a light emitting diode LED 20.

Inwardly recessed ribs 22 are provided at the base of each prong 18 to reinforce the housing in those regions.

A slot 24 extends downwardly from the base of the bifurcation to expose a central portion 25 of a rotary part 26 contained within the housing. This central portion is formed with a waist 28, so that it has the form of a pulley-wheel. A generally circular part 30 of the housing 10 is provided underneath the bifurcation, slightly off-set from the longitudinal bisecting plane thereof, and is provided with a plurality of apertures 32 to permit sound to travel more readily through the housing 10 from a generally circular electromagnetic buzzer diaphragm 34 positioned immediately inwardly of the diaphragm cover 30. Immediately above and slightly to the left of the diaphragm cover 30 there is an on-off/test switch 36 extending outwardly from the housing 10.

Three rotary knobs 38, 40 and 42 are provided as a linear array immediately to the right of the diaphragm cover 30, these knobs being, respectively, a volume control, pitch control and sensitivity control for the buzzer.

As shown in Figure la, the housing wall at each knob 38, 40 and 42 is provided with an aperture 44 through which extends a shaft 46 which is rigidly secured to the knob. The wall of the housing 10 is raised at the annulus immediately surrounding the aperture 44. The underside of the knob is provided with a skirt portion 48 which surrounds the raised annulus to form a seal between the knob and the surrounding wall.

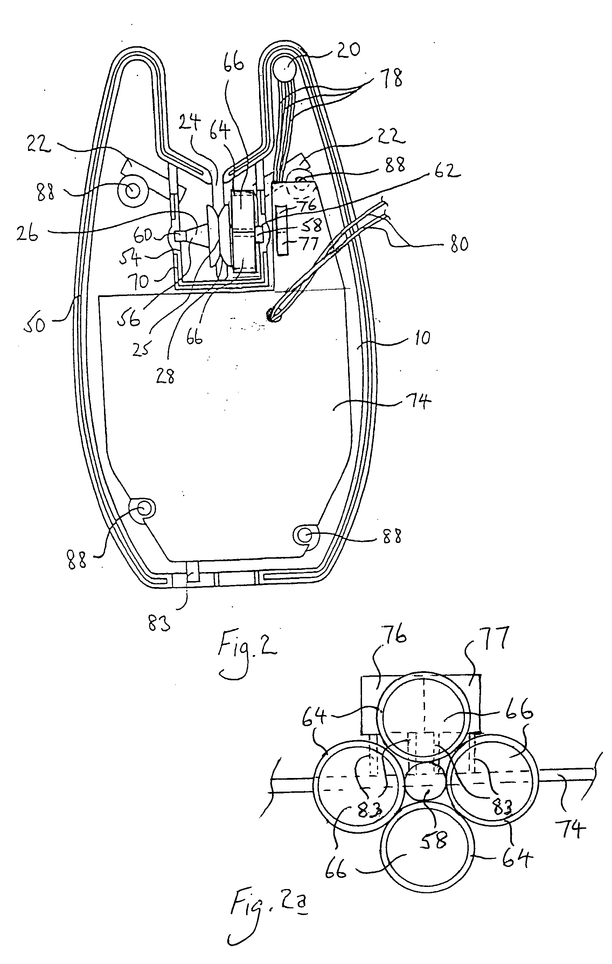

Figure 2 shows the interior of that half of the two-part housing 10 which is visible in Figure 1, with the other half of the housing 10 removed to reveal interior components of the fish-bite indicator. That edge of the housing half which faces the other half of the housing is formed with a longitudinally extending central rib 50. This engages a correspondingly formed longitudinally extending groove formed on the corresponding edge of the other housing part. An inner wall 54 is formed in the housing and generally surrounds the slot 24 to form half of an enclosure which contains the rotary part 26.

The rotary part has a tapering spindle portion 56 extending in an intended horizontal direction away from the central portion 25. A second spindle portion 58 of the rotary part 26 extends outwardly away from the central portion 25 in the opposite direction to that of the spindle portion 56. Respective recesses are formed in respective vertical parts of the inner wall 54 to provide rotary bearing means 60 and 62 respectively for the two spindle portions 56 and 58 of the rotary part 26.

Four cylindrical blocks 64 (only two of which are visible in Figure 2) extend generally parallel to the rotary axis of the rotary part 26, spaced apart at 90° intervals therearound, and house respective permanent magnets 66. The length of each cylindrical block 64 and permanent magnet 66 is such that, as the rotary part is rotated, the end of each magnet which is further from the rotary part 26, passes adjacent to a side portion of the inner wall 54.

The edges of the inner wall 54 which face the other half of the housing 10, are provided with formations 70 which interengage with corresponding formations formed on corresponding inner edges of the other half of the rotary part enclosure, to form a seal therewith.

The slot 24 in each half of the housing 10 extends to the upper face of the bottom of the enclosure so that any water which finds its way into the enclosure can readily drain outwardly therefrom.

From the foregoing description, it will be appreciated that the housing, together with the inner wall 54, defines a sealed interior. The latter contains a printed circuit board 74 which is fixed to the interior of the housing 10. The printed circuit board 74 lies in an imaginary plane that includes the axis of rotation of the rotary part. It also extends upwardly to a position alongside the side portion of the wall 54 which is adjacent to the magnets 66, so that it extends on both sides of the axis of rotation of the rotary part 26 viewed as in Figure 2 in a direction generally perpendicular to the printed circuit board. A dual Hall effect device constituted by Hall effect devices 76 and 77 of generally matching or equal sensitivity is mounted on the upward extension of the printed circuit board 74, with the sensitive faces of the devices 76 and 77 directed towards the wall 54.

The mounting of the devices 76 and 77 on the printed circuit board 74 is shown more clearly in Figure 2a. The four magnets 66 are spaced apart equiangularly around the spindle portion 58, with the cylindrical blocks 64 touching and secured to one another. The dual Hall effect device has four pins 83 extending outwardly from one side thereof, with their ends further from the device connected to the printed circuit board 74. In this way the two Hall effect devices 76 and 77 which are alongside one another are on opposite sides of an imaginary plane which passes through the axis of the spindle 58. The distance between the devices 76 and 77 on the one hand and the printed circuit board 74 on the other hand is such as to locate the sensitive parts of the devices 76 and 77 where the strongest magnetic field will pass as the rotary part 28 rotates, and with it the magnets 66.

Referring again to Figure 2, the printed circuit board 74 is connected to the LED 20 via leads 78, and power leads 80 extend from the printed circuit board 74 to a 9-volt alkaline battery (not shown).

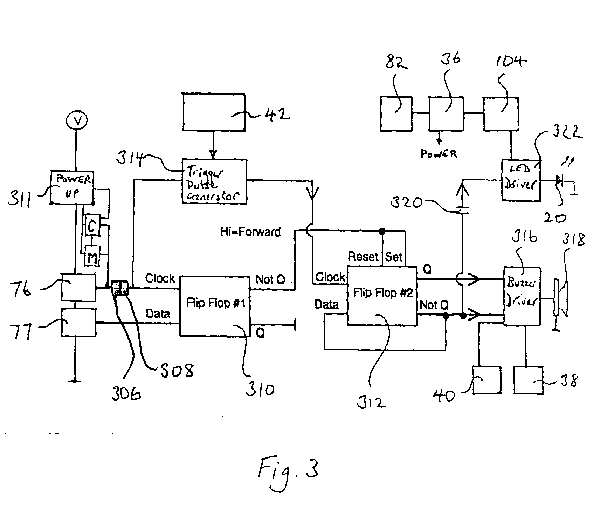

The on-off/test switch 36, the buzzer having the buzzer diaphragm 34, and each of the three control knobs 38, 40 and 42 shown in Figure 1 are all connected to the circuit board 74 to define circuitry shown in greater detail, and described hereinafter, with reference to Figure 3.

Internally screw-threaded horizontally extending portions 88 are formed in the interior of the housing part, and apertures formed in the other housing part in registration with the portions 88 when the two housing parts are brought together, enable screws (not shown) to secure those two housing parts tightly together with the rib 50 engaging the groove.

The manner in which the various parts of the indicator are connected together via the circuit board 74 is shown in Figure 3.

The Hall effect devices 76 and 77 are connected respectively to the clock and data inputs of a first bi-stable flip-flop 310. The connection between the Hall effect device 76 and the clock input of the flip-flop 310 is via a timer 306 and a latch 308. The former inhibits transfer of signals from the device 76 for a predetermined period from power up to enable the device 76 to be fully operational before any signals therefrom are transferred to the flip-flop 310, and the latch 308 holds the condition of the signal from the device 76 upon powering down.

The Hall effect devices are powered via a power up switch 311. This saves energy by switching on only upon receipt of signals indicative of line movement. It does this by switching on periodically for a brief period only, so that during this sleep mode it is switched on for a much shorter period than it is switched off during each switching cycle. When it switches on, it sends clocking pulses to a memory M and a comparator C. If the comparator C receives a signal from the Hall effect device 76 that is different from that in the memory M, indicative of the last signal received from the Hall effect device 76, in turn indicative of a change in the state thereof, the comparator C issues a triggering signal to the switch 311 to switch it to a continuously on condition. The period of the latter continuously on condition may be limited by a timer (not shown).

In this particular circuitry, the Hall effect device 76 is the one which is closed first upon movement of one of the magnets 66 as a result of longitudinal movement of a fishing line over the rotary part 26 in a direction corresponding to pay-out of the line.

The _Q output from the flip-flop 310 is connected to the set and reset inputs of a second bi-stable flip-flop 312. This flip-flop 312 is configured as a divide-by-two-counter.

A trigger pulse generator 314 is connected to receive a signal from the Hall effect device 76 and to forward trigger pulses to the clock input of the flip-flop 312. The sensitivity control 42 is connected to the trigger pulse generator 314 so that the rate at which trigger pulses are issued therefrom in dependence upon a given frequency of pulses received from the Hall effect device 76 is dependent upon the setting of the sensitivity control 42.

The _Q output from the second flip-flop 312 is fed back to the data input thereof.

Both the Q and _Q outputs from the bi-stable flip-flop 312 are connected to a buzzer driver 316 which in turn is connected to drive a buzzer 318 provided with the diaphragm 34 shown in Figure 1.

The _Q output from the bi-stable flip-flop is connected via a capacitor 320 to an LED driver 322 which in turn is connected to the LED 20.

The volume control 38 and pitch control 40 are both connected to the buzzer driver 316 in such a manner as to control the volume and pitch of the output from the buzzer, respectively.

The power source 82, the on/off/test switch 36 and the battery test circuit 104 are connected in series in that order, to the LED driver 322 to enable the detector to be switched on and off and also to enable the power source to be tested.

When the detector is installed for use, the fishing line of a fishing rod is passed over the rotary part 26 so that longitudinal movement of the line will rotate that part.

In the event that a fish bite causes the fishing line to be paid out, successive movements of the magnets 66 over the Hall effect devices 76 and 77 cause switching of the Hall effect device 76 to precede switching of the Hall effect device 77 each time a magnet 66 passes over them.

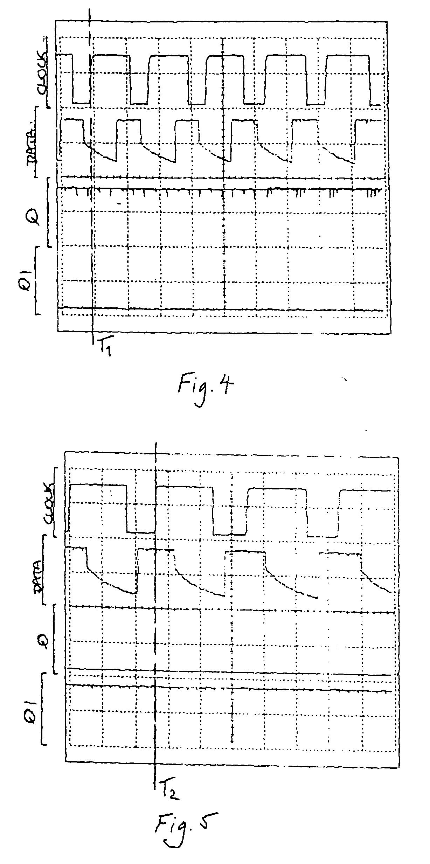

The resulting voltage levels at the clock and data input respectively of the first flip-flop 310 of the circuitry shown in Figure 3, are shown in Figure 4. From this, it will be seen that, at the instant the clock input is pulled high, the data input is still low. As a result, the Q output of the flip-flop 310 goes low, and its complementary output _Q goes high. This occurs at the instant T₁ shown in Figure 4, and at each successive corresponding instant in the cyclically changing wave forms.

Conversely, if the rotary part 26 is rotated in the opposite sense, corresponding to a drop-back bite, then the clock input of the flip-flop 310 is pulled high while the date input is still high, because in this instant, it is the Hall effect device 77 which is switched before the Hall effect device 76 for a given passage of one of the magnets 66 over these Hall effect devices. Such an instant is indicated at time T₂ in Figure 5, and at each successive corresponding instant in the cyclically changing voltage levels.

At this instant, therefore, the Q output from the flip-flop 310 goes high, and its complimentary output _Q goes low.

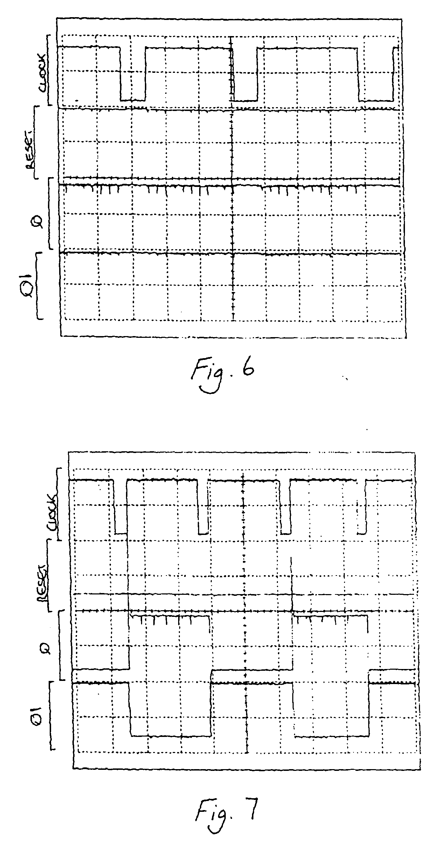

If the set and re-set inputs of the flip-flop 312 are held high, as is the case for a normal bite where fishing line is paid out, with the _Q output of the flip-flop 310 being held high, then both of the outputs of the flip-flop 312 will also be held high, as shown in Figure 6. As a result, a single-tone intermittent audible output is issued from the buzzer 318, its frequency being dependent upon the speed of movement of the line. Its volume and pitch will be dependent upon the setting of the volume and pitch controls 38 and 40 respectively.

In the event that the set and re-set inputs are held low, the Q and _Q outputs from the flip-flop 312 will oscillate in anti-phase, at half the frequency of the clock pulses. As a result, a two-tone audible signal is issued from the buzzer 318 at a frequency which is again dependent upon the speed of movement of the line.

As regards the LED 20, this is illuminated continuously for a normal bite in which the fishing line is paid out, and intermittently for a drop-back bite.

The power cycling circuitry C, M and 311 could be used in a single Hall effect detector arrangement which does not indicate direction of line movement, but which does indicate longitudinal line movement nonetheless.

The power cycling circuitry C, M and 311 may be made integral with the or each Hall effect device.

Alternatively, the power cycling circuits may be incorporated in a single microcontroller chip which may also incorporate the driver circuitry for the LED 20 and buzzer 318, and the logic circuits may be incorporated in the dual Hall effect device. The latter may comprise the device having the product code A 3423xKA available from Allegro Microsystems Inc. which has inbuilt circuitry to provide signals indicative of rotary speed and sense of rotation.

Whilst the illustrated bite detector has been shown as a preferred embodiment of the present invention, it will be appreciated that the invention is not limited to this particular embodiment, and that very many variations and modifications may occur to a reader without taking the resulting detector outside the scope of the present invention. To give a few examples only, the Hall effect devices 76 and 77 could be reversed, or the trigger pulse generator could be connected to the output from the Hall effect device 77 instead of that of the Hall effect device 76. The buzzer driver could be connected only to the _Q output of the flip-flop 312 like the LED driver.

## Claims

1. A fish-bite detector having magnetic means (66) to change the magnetic field in a predetermined region of the detector in dependence upon movement of a fishing line which engages a rotary part (26) of the detector when the latter is in use, and sensor means (76, 77) provided in the said predetermined region to produce a signal indicative of such movement, in which the magnetic means comprise at least one magnet (66) which is mounted to move with the rotary part (26), the magnetic axis of which magnet (66) is generally parallel to the axis of rotation of the rotary part (26), **characterised in that** the sensor means (76, 77) comprise two Hall effect devices (76 and 77), in which the Hall effect devices (76 and 77) have their sensitive faces directed towards the magnetic means (66), and in which the Hall effect devices (76 and 77) are located alongside one another on opposite sides of an imaginary plane which passes through the axis of rotation of the rotary part (26), thereby enabling the Hall effect devices (76 and 77) to produce a signal indicative of the direction of longitudinal movement of the line.

2. A fish-bite detector according to claim 1, **characterised in that** the two Hall effect devices (76 and 77) have respective magnetic sensitivities, the greater of which is no more than 10% greater than the other, preferably no more than 1% greater.

3. A fish-bite detector according to claim 1, **characterised in that** the two Hall effect devices (76 and 77) have respective magnetic sensitivities, the greater of which is no more than 1% greater than the other.

4. A fish-bite detector according to claim 1, **characterised in that** the respective magnetic sensitivities of the two Hall effect devices (76 and 77) are substantially equal.

5. A fish-bite detector according to any preceding claim, **characterised in that** the magnetic means (66) comprise at least four magnets (66) spaced apart around the axis of the rotary part (26).

6. A fish-bite detector according to claim 5, **characterised in that** the magnetic means (66) comprise six magnets equiangularly spaced around the axis of the rotary part.

7. A fish-bite detector according to claim 5, **characterised in that** the magnetic means (66) comprise eight magnets equiangularly spaced around the axis of the rotary part.

8. A fish-bite detector according to any preceding claim, **characterised in that** the Hall effect devices (76 and 77) are parts of a dual Hall effect device.

9. A fish-bite detector according to any preceding claim, **characterised in that** the Hall effect devices (76 and 77) are mounted on a printed circuit board (74) of the detector which is generally parallel to the axis of rotation of the said rotary part (26) and which extends to a region alongside the magnetic means (66), on both sides of the axis of rotation of the said rotary part (26) viewing the detector in a direction generally perpendicularly to a printed circuit board (74).

10. A fish-bite detector according to claim 9, **characterised in that** the dual Hall effect device (76, 77) has four connecting pins (83) extending from one side thereof which are connected to the printed circuit board (74).

11. A fish-bite detector according to any preceding claim, **characterised in that** one of the Hall effect devices (76) is connected to the clock input of a bi-stable flip-flop (310), and the other is connected to the data input thereof.

12. A fish-bite detector according to claim 11, **characterised in that** the Hall effect device (76) which is switched first when the fishing line moves in a direction corresponding to a paying out of the line is connected to the clock input of the flip-flop (310).

13. A fish-bite detector according to claim 11 or claim 12, **characterised in that** the Q and _Q outputs of the bi-stable flip-flop (310) are connected to both the set and reset inputs of a second bi-stable flip-flop (312), the clock input of which is connected to receive an output from a trigger pulse generator (314) connection to one of the Hall effect devices (76) to generate pulses in dependence upon closure of that Hall effect device (76), the _Q output of the second flip-flop (312) being fed back to the data input thereof.

14. A fish-bite detector according to claim 13, **characterised in that** the trigger pulse generator (314) is connected to receive signals from that Hall effect device (76) which is connected to the clock input of the first-mentioned flip-flop (310).

15. A fish-bite detector according to claim 13 or claim 14, **characterised in that** the Q and _Q outputs from the second flip-flop (312) are connected to a buzzer driver (316) which in turn is connected to a buzzer (318).

16. A fish-bite detector according to claim 13 or claim 14, **characterised in that** the _Q output of the second flip-flop (312) is connected to an LED driver (322) which in turn is connected to drive an LED (20).

17. A fish-bite detector according to claim 15, **characterised in that** the buzzer driver (316) is so constructed as to cause a first audio signal to be issued when the line moves in a longitudinal direction corresponding to a paying-out of the line, and a second audible signal, which differs from the first, when the line moves in the other longitudinal direction.

18. A fish-bite detector having magnetic means (66) to change the magnetic field in a predetermined region of the detector in dependence upon movement of a fishing line which engages a part (26) of the detector when the latter is in use, and a Hall effect device (76 or 77) provided in the predetermined region to produce a signal indicative of such movement, **characterised in that** the Hall effect device (76 or 77) is connected to a periodic timer switch (311) so that it is switched on and off at predetermined intervals, such that the on period in each cycle is significantly shorter than the off period, and **in that** a comparator (C) is also connected to the Hall effect device (76 or 77) so that the state of the latter during an on period is compared with the state it had in a previous on period, and if the state has changed, the comparator (C) switches the Hall effect device (76 or 77) to a continuously on condition.
